# EUROPEAN PATENT SPECIFICATION

(11) **EP 2 240 396 B1**
(45) Date of publication and mention of the grant of the patent: **07.03.2012**
(21) Application number: 09702350.1
(22) Date of filing: 14.01.2009
(51) Int. Cl.: B66D 3/02, B60P 7/08

(54) **DEVICE AT A WINCH**
VORRICHTUNG AN EINER SEILWINDE
DISPOSITIF SUR UN TREUIL

(30) Priority: 16.01.2008 SE 0800104
(43) Date of publication of application: 20.10.2010
(73) Proprietor: SpanSet Inter AG, 8832 Wollerau (CH)
(72) Inventor: LINDBLAD, Lennart, S-SE-447 93 Vårgårda (SE)
(74) Representative: Cederbom, Hans Erik August
(86) International application number: PCT/SE2009/050020
(87) International publication number: WO 2009/091326

(56) References cited:
- DE-A1- 1 800 278
- GB-A- 1 324 529
- GB-A- 1 324 529
- US-A1- 2006 133 905
- US-B1- 7 090 450

## Description

The present invention relates to a device at a winch for a reelable pulling member, such as, for instance, a strap for providing tightening and locking of said pulling member.

Known winch devices to provide tightening as well as force-absorbing locking of the pulling member in lashing and clamping of cargo before, for instance, transportation, and also in order to allow being capable of providing an enhanced tightening force, have turned out to be complicated both as regards the construction thereof and the function thereof. Similar winches are known from US20060133905 and DE 1900278.

Therefore, the main object of the present invention is primarily to solve said problems simply and efficiently. In addition, a number of additional technical impacts and advantages are intended to be obtainable by the invention.

Said object is attained by means of a device according to the present invention that essentially is characterized in that an advance mechanism to provide advancement of a winding shaft of said pulling member comprises an actuatable eccentrically mounted rotation part rotatably mounted perpendicular or parallel to the winding shaft of said advance mechanism, that the winding shaft is connected with at least one advancement wheel and with at least one lock wheel, that the advance mechanism and an actuatable locking mechanism are co-operatable with said advancement wheel and with said lock wheel, respectively, the eccentrically mounted actuation part being in direct or indirect connection with said advance mechanism for the actuation of the advancement wheel for stepwise advancement.

The invention is described below in the form of a plurality of different embodiments, reference being made to the appended drawings, in which
Figs. 1-2 show a first embodiment example of a winch device as seen in perspective and with one end-portion plate thereof removed for illustrative purpose,
Figs. 3-4 show a second embodiment example of a winch device,
Figs. 5-7 show an embodiment example of winch in double design,
Figs. 8-9 show a motor-driven winch,
Figs. 10-11 show additional examples of a motor-driven winch,
Figs. 12-14 show an embodiment example where the winch is provided with a spring for retension,
Figs. 15-17 show an embodiment example of a winch device provided with a hand crank as well as a handwheel,
Fig. 18 shows an embodiment example of a winch device having a built-in retension mechanism inside a manually actuatable handwheel, and
Figs. 19-23 finally show an embodiment example of a winch having a handle having cam-shaped end portions, wherein

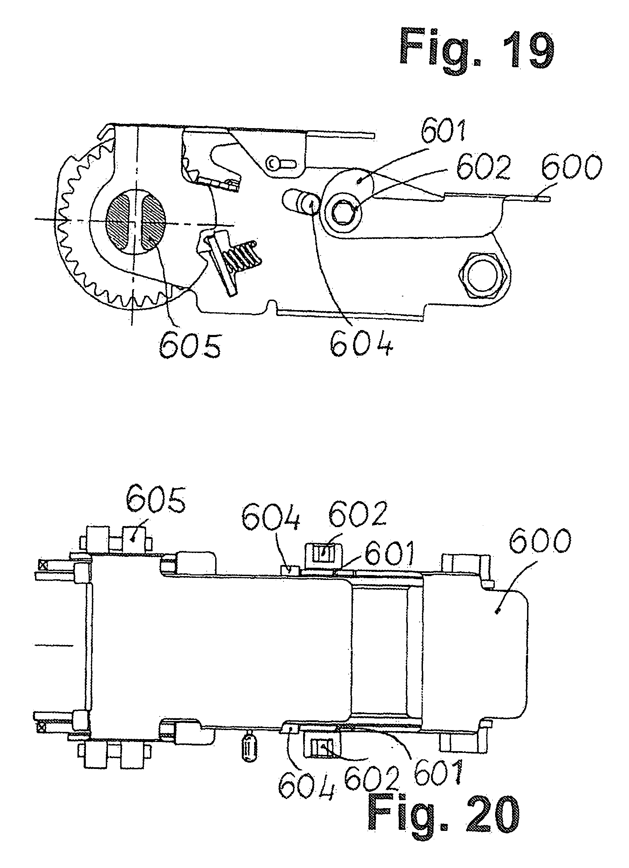

Fig. 19 shows the winch in side view and idle state,
Fig. 20 shows the same in top view,

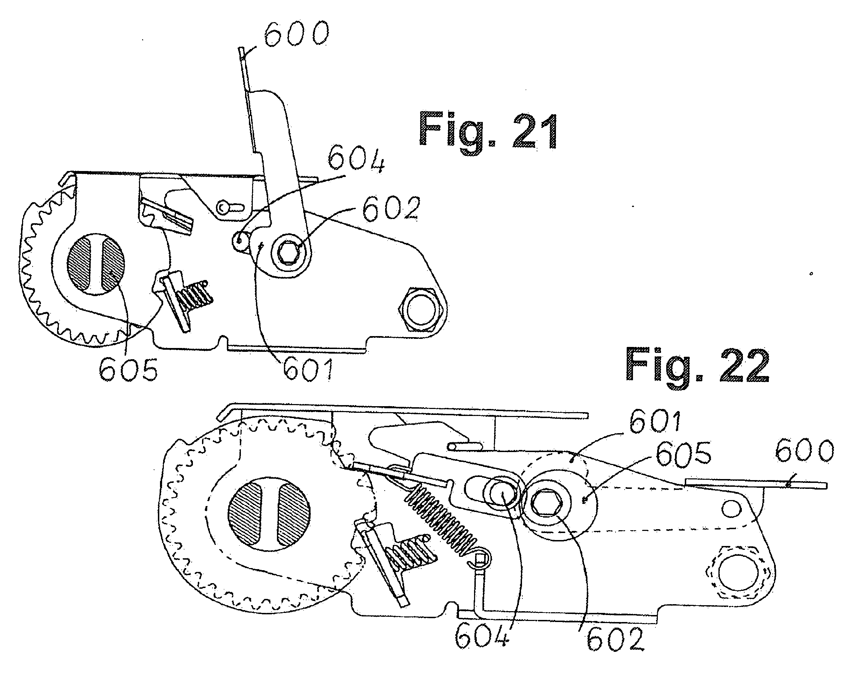

Fig. 21 shows tensioning by means of the handle,
Fig. 22 shows the winch in section, and

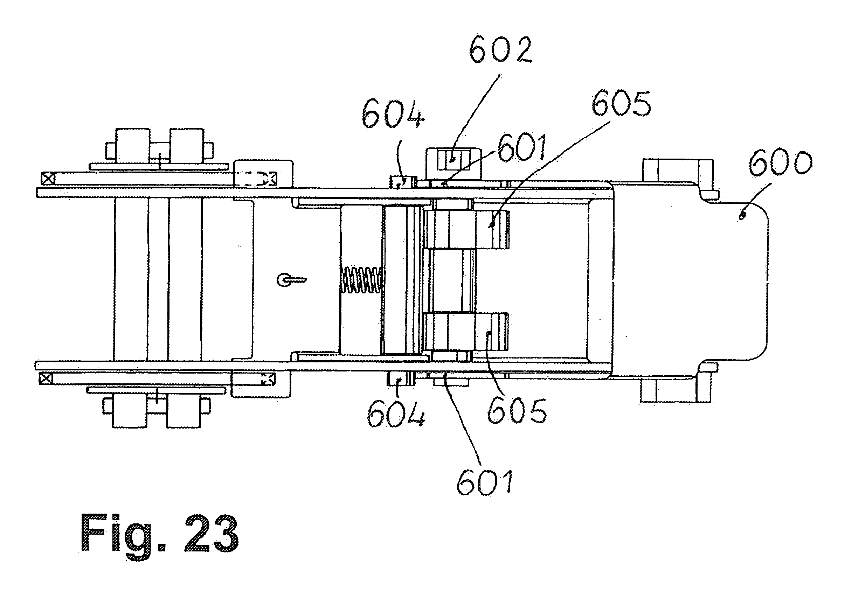

Fig. 23 shows the winch according to Fig. 22 in top view.

A device 1 at a winch 2, which is arranged for the receipt of a reelable flexible pulling member 3, such as, for instance, a strap of textile or another strong material that is suitable to be used for providing tightening and locking of said pulling member 3, is formed of an advance mechanism 4 that is arranged to provide advancement of a winding shaft 5 intended for receivable reeling of the pulling member 3 around the same.

The advance mechanism 4 comprises an actuatable rotation part 6 rotatably mounted at an angle X to the winding shaft 5 of said advance mechanism.

Said angle X is right or at least substantially right. Alternatively, in order to provide advancement of a winding shaft 5 of a said pulling member 3, the advance mechanism 4 comprises an actuatable eccentrically mounted rotation part 6 rotatably mounted parallel to the winding shaft 5 of said advance mechanism 4 such as, for instance, is shown in a number of the drawing figures.

The winding shaft 5 is connected with at least one advancement wheel 7 and with at least one lock wheel 8. In that connection, the advance mechanism 4 and an actuatable locking mechanism 9 are co-operatable with said advancement wheel 7 and with said lock wheel 8, respectively. In that connection, an eccentrically mounted actuation part 10 is in direct 11 or indirect 110 connection with said advance mechanism 4 in order to provide actuation of the advancement wheel 7 for stepwise advancement.

According to the preferred embodiment example, the advancement wheel 7 and the lock wheel 8 are joint, and preferably such a joint advance and lock wheel 12 is connectedly arranged with said winding shaft 5 at each end 13, 14 of said winding shaft 5. A strap or some other pulling member 3 is arranged to be received to be wound around said winding shaft 5 in the interspace 15 between said combined pair-wise advance and lock wheels 12.

According to a first embodiment example of the invention, an eccentrically mounted roll 10 is mounted to be in direct connection with a drive-actuating advance part 16 formed as a plate or another pressure part and abuts directly with its abutment surface part 17, preferably formed of copper-base bearing metal, against an outer edge 18 of said advance part 16.

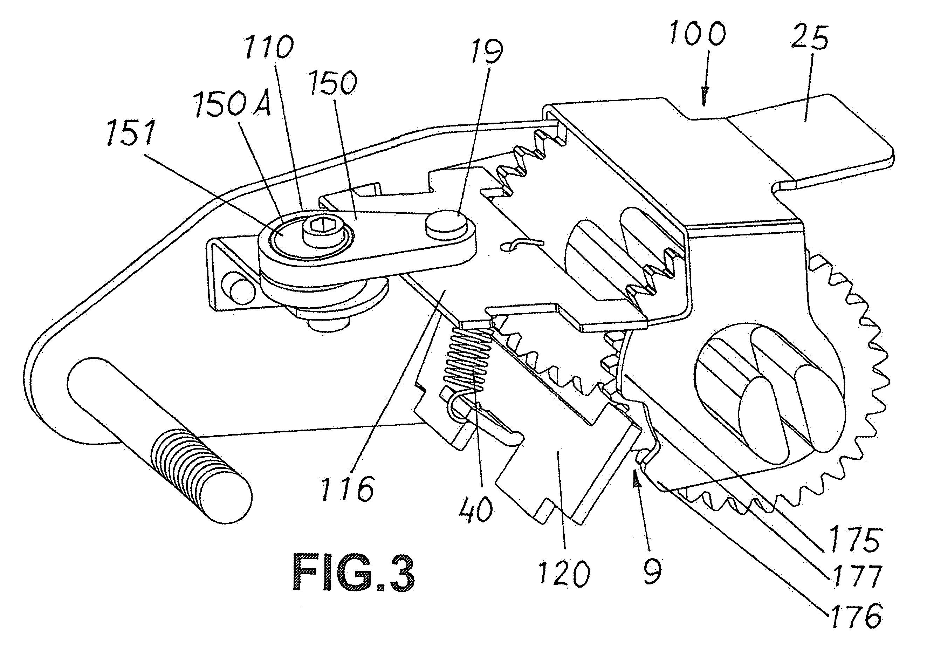

An alternative embodiment of an actuation part 100, shown in Figs. 3-4, comprises an eccentrically mounted swinging arm 150 that with one end 150A thereof is mounted on an eccentrically rotatable shaft part 151 and the other end 150B thereof is rotatably connected with a said advance wheel-actuating advance part 116 formed as a plate or another pressure part, for instance, a plate-shaped one. Via a pivot 19, said swinging arm 150 is articulatedly connected with said advance part 116 at the end 150B opposite the end 150A where the eccentric mounting 151 is arranged.

The locking mechanism 9 comprises a tiltable ratchet part 20, preferably in the form of a ratchet plate, which is arranged to be in detachable lock engagement with a said lock wheel 8.

Suitably, the lock wheel 8 as well as the advancement wheel 7 are provided with cog teeth 21 with cog gaps 22 between the cog teeth 21, i.e., in the form of gears in which the locking mechanism 9 and the advance mechanism 4 are arranged to be detachably actuatable in engagement to provide lock co-operation L and to provide drive co-operation D, respectively.

In order to allow detachable rotary co-operation with a manual or mechanical rotation part, for instance a screwdriver, an electric nut runner, or a hex head wrench, though not shown in the drawing, the eccentrically mounted actuation part 10 comprises a grip part 23 in the form of an irregular cavity, e.g., a hex head screw hole, or an external rotation part, e.g., a nut-shaped grip part.

Either a single winding shaft 5 or pair-wise winding shafts 105, 106 is/are arranged to be actuatable by a respective advancement wheel 7; 107 and lock wheel 8; 108, a joint advance part 16; 116 and a joint ratchet part 20; 120 being arranged to actuate said winding shaft 5 or winding shafts 105, 106.

Furthermore, a manually actuatable release arm 25; 125 is arranged for the release of the advancement and the locking of the winding shaft 5 or the winding shafts 105, 106.

If mechanical operation is desired, a preferably battery-powered electrical motor 26 may be connected to the drive mechanism of the winch, according to what has been mentioned above, via, for instance, an eccentrically mounted driving wheel 210, which in turn abuts against an angled portion 250, according to what has been described above, at the end 216A of a driving plate 216 or another actuation part for advancing a driving gear 207. In other respects, the nature and the function of this variant is the same as the other embodiment examples described and shown above.

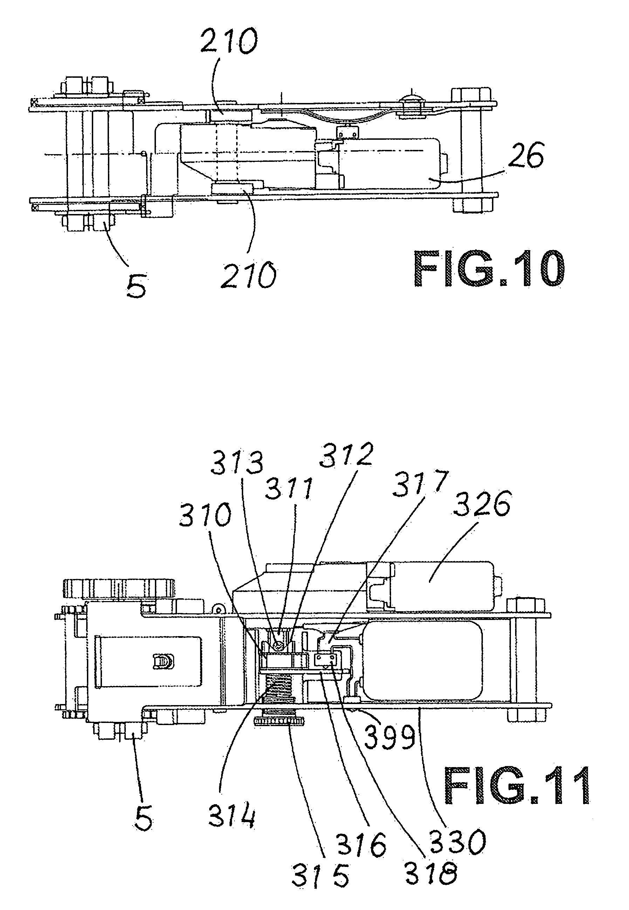

In Fig. 10, a bendable spring is shown, which straightens upon load and which actuates a circuit breaker, for automatically maintained power.

Said example may also comprise a unit, not shown, which allows a variable adjustment of the tightening force by means of an adjustable spring force. Refer to Fig. 11 and item 314.

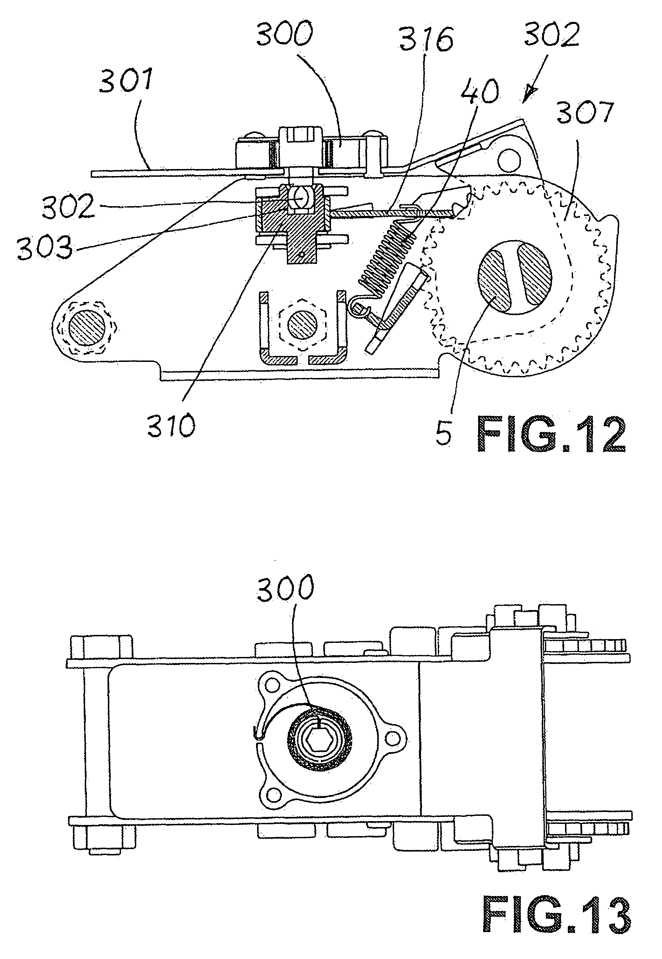

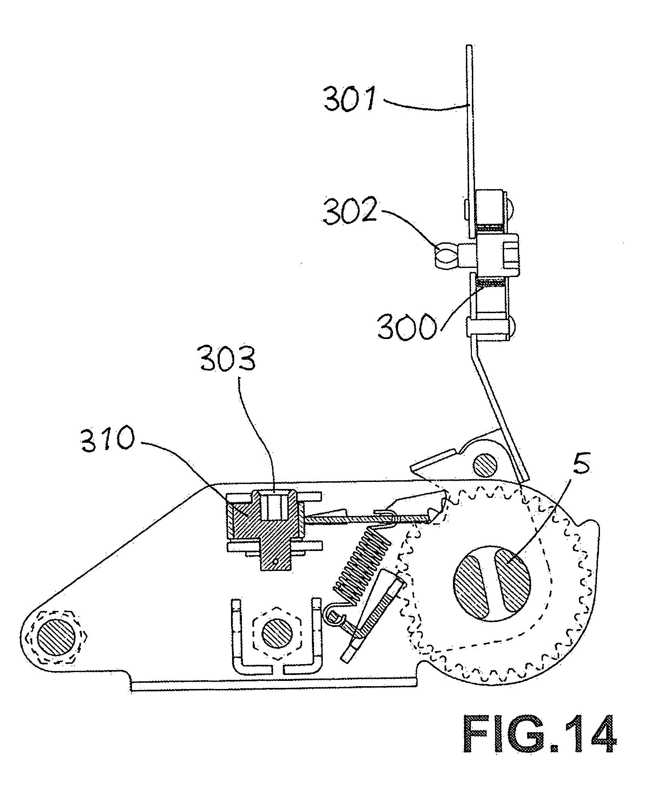

Driving may also be effected by means of an actuatable spring 300, preferably of the watchspring type. This mainspring 300 may be arranged in a pivotably mounted swinging arm 301 and having a journal-shaped engagement part 302 that can be received in a mating recess 303, according to what has been described above, in the interior of the driving wheel 310, for subsequent actuation of the winding shaft 5 via an advance part 316 that co-operates with the driving wheel 307 of the winch 302. Refer to Figs. 12-14.

In said devices, there is a spring 40 that is connected between the advance mechanism 4 and the locking mechanism 9 in order to, on one hand, press an advance plate 16 or another advance part against an advance gear 7, and on the other hand press a locking plate 20; 120 or another ratchet part into engagement against and with a locking gear 8.

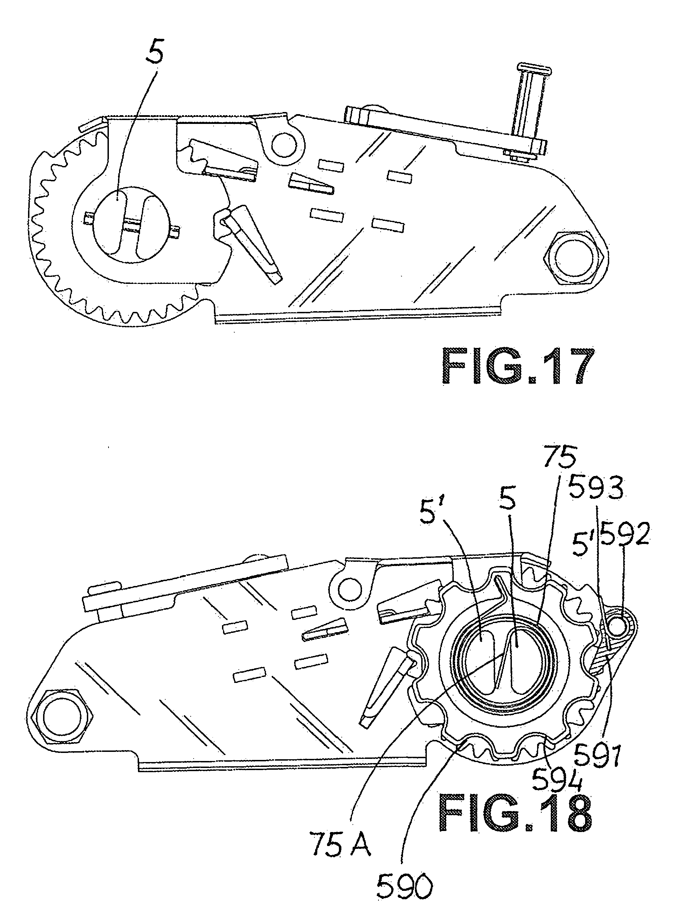

During the utilization of winches in vehicles, slack may arise in the strap after a time of driving cargo that is lashed by means of straps that are controlled by means of winch. Then, the strap has to be retightened. For this purpose, there is a retension mechanism 75 in the form of a spring, which is accommodated in a manually actuatable handwheel 76 of the winding shaft 5, or on a release arm of the mechanism in question. Thereby, slack of the strap 3 is avoided or at least decreased. Refer to Fig. 18.

Below, there is a description in more detail of the drawing examples and the devices shown therein.

The invention has been realized with the purpose of, by simple means, providing enhanced tightening force and simultaneously a force-absorbing locking of an element, preferably a textile strap, upon lashing and clamping of cargo transported.

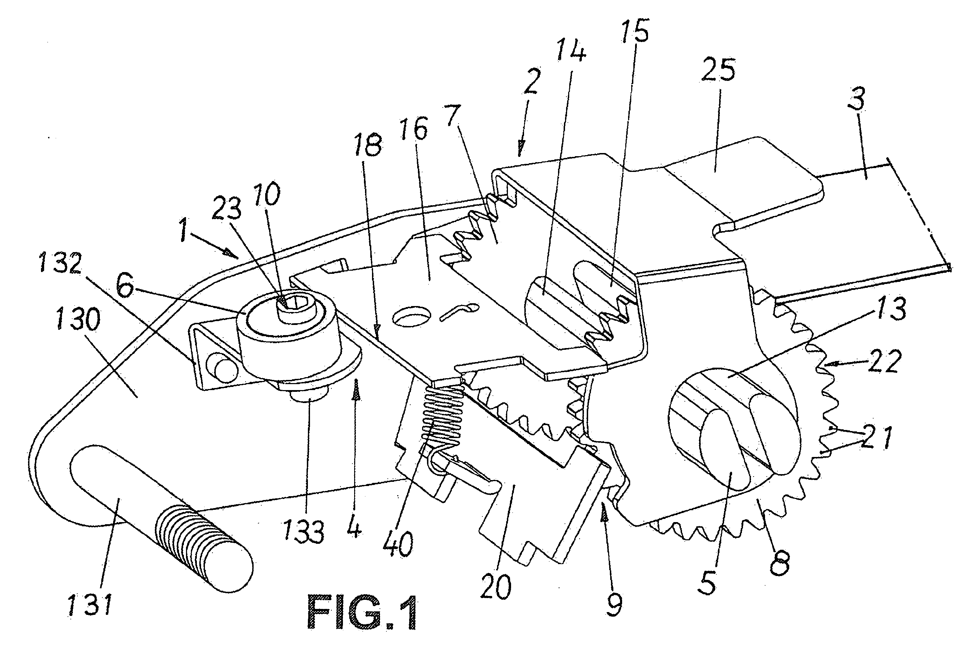

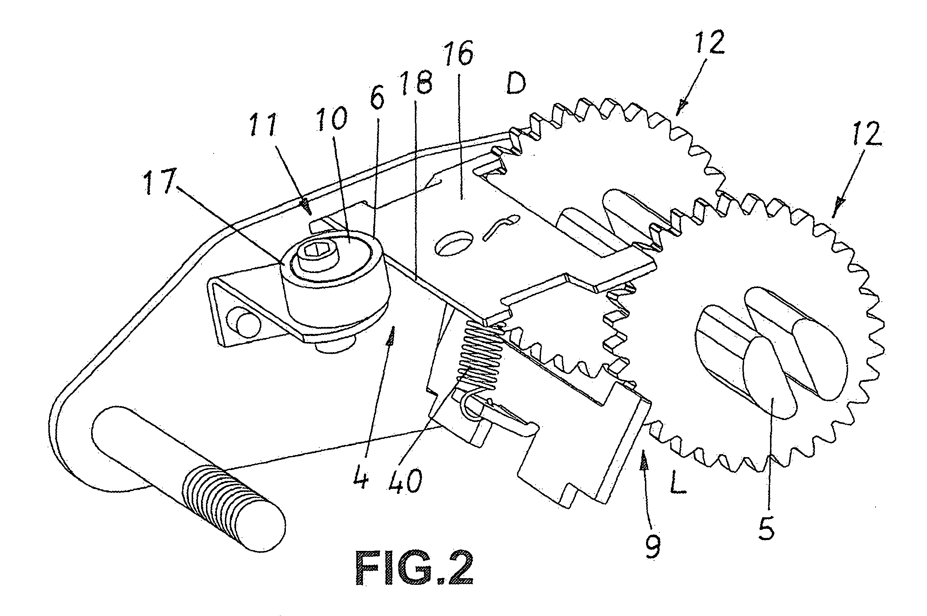

The device is described below, reference being made to accompanying illustrations, wherein Figs. 1 and 2 show a winch in perspective, having one end-portion plate of two end-portion plates 130 removed for illustrative purpose, on each side of the locking and advancing gears, which form a frame together with the divided rotation shaft 5 and a fixing bolt 131. The function is as follows:

On a support plate 132, the circular cam part 6 is eccentrically mounted by means of a projecting shaft journal 133. In this embodiment, the shaft journal 133 has an internal hexagon hole 23 for the connection of, e.g., a motor-driven nut runner, hand crank or hex head wrench. The cam part 6 is surrounded by a friction-reducing ball race. Upon rotation of the cam part - half a revolution (180°) - the advance plate 16 is displaced according to Fig. 2 in such a way that it, by the engagement in the gears 7, advances the same one cog 21 and the gears 7, 8 are simultaneously secured against reverse rotation by the fact that the ratchet plate 20 engages the next cog 21, 22. In the sequence, the advance plate 16 is pressed by means of a spring 40, on one hand against the ball race 6 of the eccentric cam, and on the other hand downward toward the gear 7. In the demonstrated example according to Figs. 1 and 2, said spring 40 is a joint springing element for the ratchet plate 20 as well as the advance plate 16.

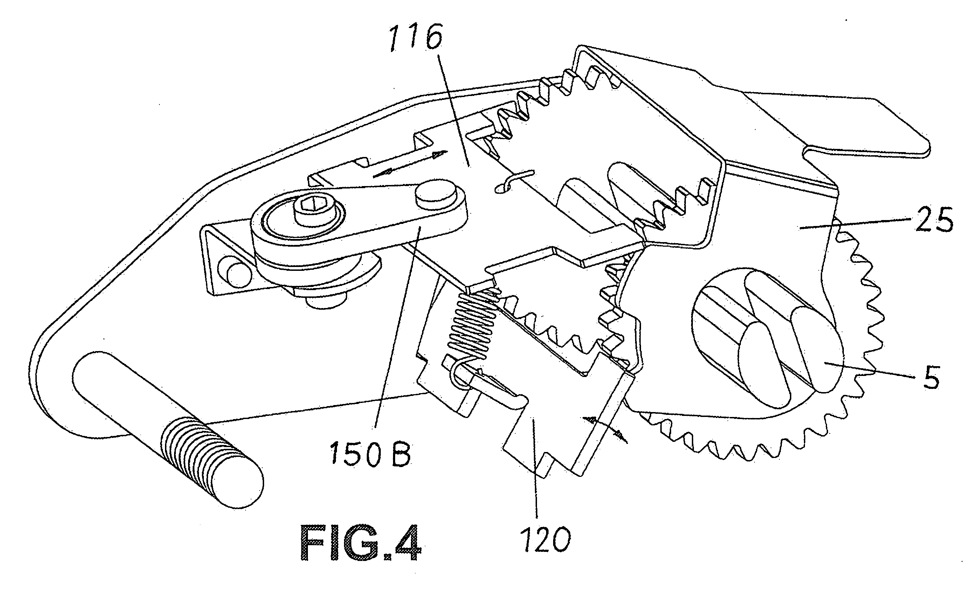

Furthermore, the winch according to the invention is provided with a release arm 25 that, upon rotation around the shaft 5, first releases the advance plate 16 and then, upon further rotation, also the ratchet plate 20. Refer to Fig. 4.

Figs. 3 and 4 show the invention according to the above having an alternative advancement device made as a crankshaft-connecting rod 150. Furthermore, in Figs. 3 and 4, the release mechanism 100 is shown consisting of the arm 25 having side pieces, as well as the cam projections 175, 176 and an intermediate recess 177. In other respects, this embodiment of the winch operates in the same way as has been described above for Figs. 1 and 2.

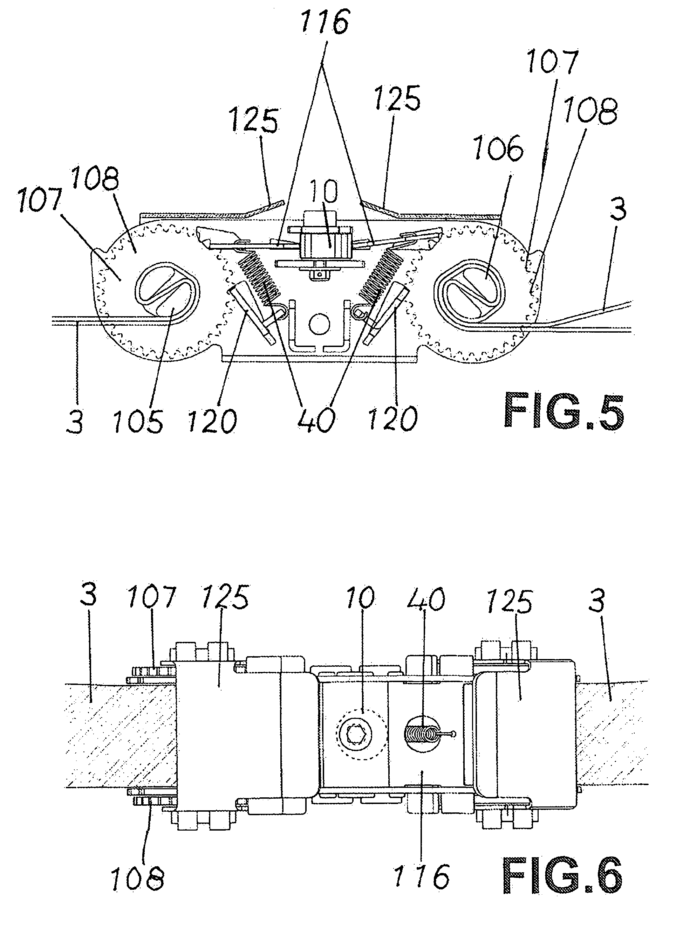

Figs. 5-7 show an alternative cam winch in double design. Here, there are two advance and release mechanisms according to the description above, directed from each other. Both winches are fed by a joint eccentric cam part 10.

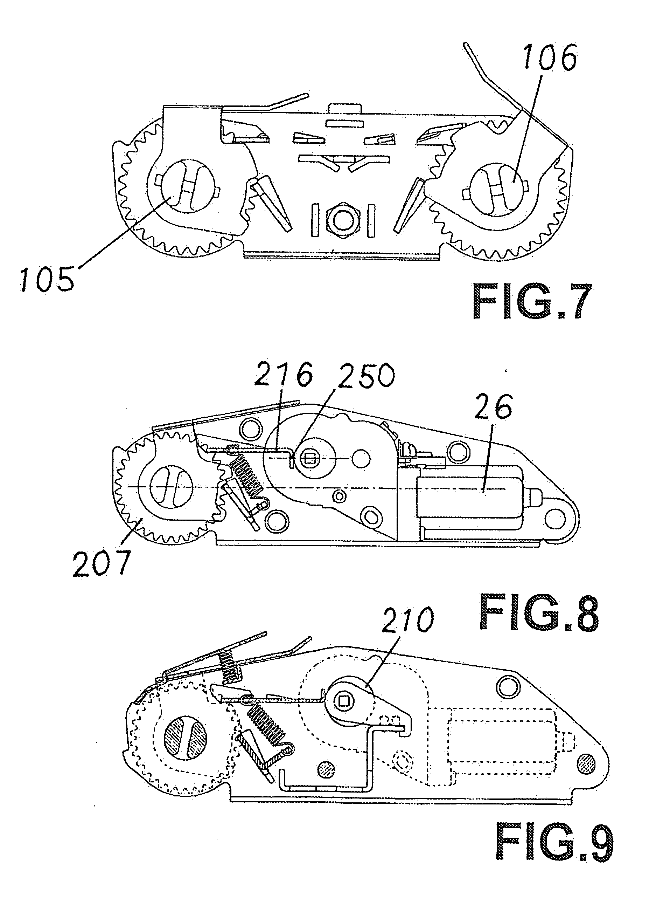

Figs. 8-10 show an embodiment according to the invention, where there is a battery-powered electric motor 26 fixedly fitted inside the winch and having a member adapted for sensing the clamping force and situated between the battery (not shown in the figure) and the motor, which upon decreased clamping force automatically resets the set value. In this embodiment, the advance cams 210 are adapted to make vertical rotation and are situated on each side of the motor 26 for smoother driving of the advance plate 216.

Fig. 11 shows an alternative embodiment of this motor-driven cam winch. Here, the electric motor 326 is placed externally. This allows an alternative, variably adjustable tightening force. The function is as follows:
The motor 326 is coupled to the drive shaft 5, which by a drive pin 313 drives the cam wheel 310, when the same is axially and radially movable on the shaft 311. The V-shaped recess 312 of the cam wheel is pressed against the drive pin 313 by a helical spring 314. This spring 314 can be biased by means of an adjusting knob 315 threaded in the end-portion plate 330 of the winch. Between the spring 314 and the cam wheel 310, the breaker plate is applied. When the breaker plate and the cam wheel, upon increased tightening force from the drive pin 313, press together the spring 314, the circuit 317 to the electric motor 46 is broken by a circuit breaker 318. Between the battery and the breaker, an on-off circuit breaker 399 is placed.

Figs. 12-14 show an additional alternative, where the release arm 301 has been provided with an encapsulated clock spring 300, which is tensioned simultaneously with the strap tightening, alternatively is tensioned separately after the strap tightening and then is connected into the recess of the cam driving 303.

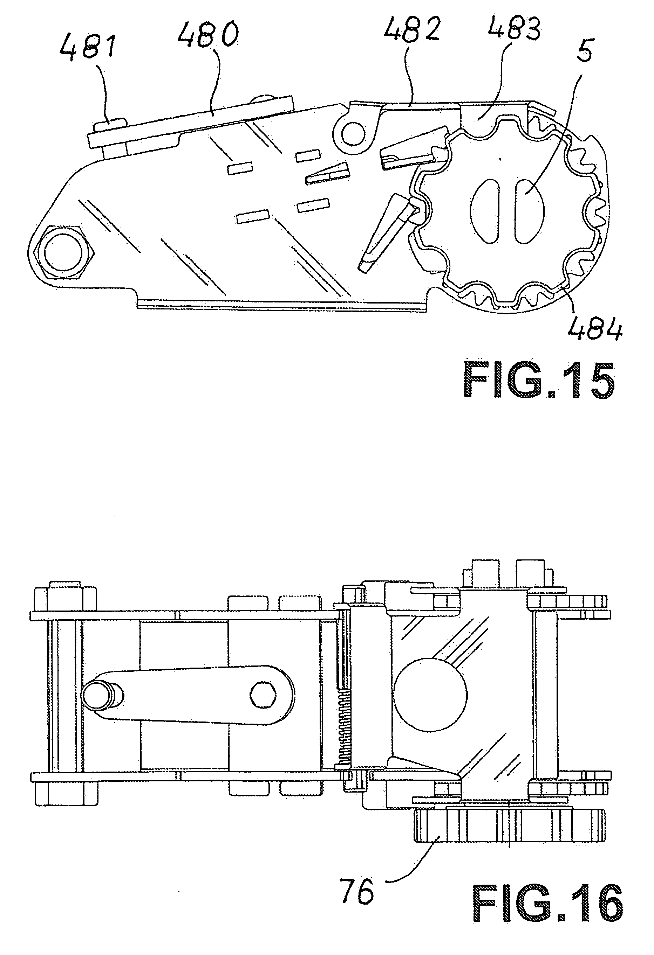

Figs. 15-17 show an embodiment of the invention, where the winch has been provided with a hand crank 480 as well as a handle 481 that is displaceable therein and during transportation is inserted into a protected position inside the winch. Furthermore, the release arm 482 has been provided with a spring-loaded locking peg 483, which clamps the release arm 482 during transportation. In order to allow a quick elimination of slack of the strap, before stretching, a fixedly fitted handwheel 484 is arranged on the winding shaft 5.

Fig. 18 shows a retension device consisting of a coil or clock spring 75 fitted inside a handwheel 590 freely rotatable around the winding shaft 5. Furthermore, around a shaft pin 592, there is mounted a ratchet 591 rotatably acting against the handwheel 590 and the recesses 594 thereof and pressed against the recesses of the handwheel by a torsion spring 593. The function thereof is the following: When the desired tensioning of the lashing strap has been effected, e.g., by means of the hand crank, the coil spring 75 is tensioned using the handwheel, the inner end branch 75A of which acts against the shaft halves 5¹. By virtue of this, the slack that may occur when the lashed goods possibly are compressed during the transportation is eliminated.

The embodiment according to Figs. 19-23 comprises the following:
What essentially has been added to the construction mentioned above is the handle 600 having the cam-shaped end portion 601. Said handle 600 is mounted around a shaft 602, the end portions of which may be formed with, e.g., an internal hexagon hole 603, which as previously allows tightening using, for instance, a nut runner.

Simultaneously, the handle 600 allows manual tightening without any tool.

In Fig. 21, there is shown tensioning by means of the handle 600, the cam part 601 of which pushes the shaft 604 of the advance shuttle forward in the elongate slots of the base frame and in this way causes a rotation of the winding shaft 605 of one step.

In Fig. 22, the winch is shown in section, where 605 is the internal cam, which advances the shuttle in accordance with above-mentioned function.

The function and nature of the invention should have been understood with the aid of what has been described above and shown in the drawings.

Naturally, the invention is not limited to the embodiments described above and shown in the accompanying drawings. Modifications are feasible, particularly as for the nature of the different parts, or by using an equivalent technology, without departing from the protection area of the invention, such as it is defined in the claims.

## Claims

1. Device (1) at a winch (2) comprising a pulling member (3), comprises an advance mechanism (4) to provide advancement of a winding shaft (5) of said pulling member (3) comprising an actuatable eccentrically mounted rotation part (6) rotatably mounted perpendicular or parallel to the winding shaft (5) of said advance mechanism (4), wherein the winding shaft (5) is connected with at least one advancement wheel (7) and with at least one lock wheel (8), wherein the advance mechanism (4) and an actuatable locking mechanism (9) are co-operatable with said advancement wheel (7) and with said lock wheel (8), respectively, the eccentrically mounted actuation part (10) being in direct (11) or in indirect (110) connection with said advance mechanism (4) for the actuation of the advancement wheel (7) for stepwise advancement, **characterised in that** an eccentrically mounted roll (10) is in direct connection with a drive-actuating advance part (16) of the device formed as a plate or another pressure part.

2. Device according to claim 1, **characterized in that** the advancement wheel (7) and the lock wheel (8) is joint, and that preferably such a joint advance and lock wheel (12) is connectedly arranged with said winding shaft (5) at each end (13, 14) of the same.

3. Device according to any one of the preceding claims, **characterized in that** an eccentrically mounted swinging arm (150) is connected with an advance wheel-actuating advance part formed as a plate (116) or another pressure part.

4. Device according to any one of the preceding claims, **characterized in that** the locking mechanism (9) comprises a ratchet part (20), preferably a ratchet plate, which is arranged to be in detachably actuatable lock engagement with a lock wheel (8).

5. Device according to any one of the preceding claims, **characterized in that** the lock wheel (8) as well as the advancement wheel (7) are provided with cog teeth (21) in the form of gears, in which the locking mechanism (9) and the advance mechanism (4) are arranged to be detachably actuatable in engagement for lock co-operation (L) and for drive actuation (D), respectively.

6. Device according to any one of the preceding claims, **characterized in that** the actuation part (10) comprises a grip part (23) in the form of an irregular cavity or external rotation part for detachable rotary co-operation with a manual or mechanical rotation part, for instance a screwdriver, an electric nut runner, or a hex head wrench.

7. Device according to any one of the preceding claims, **characterized in that** a single winding shaft (5) or pair-wise double winding shafts (105, 106) is/are actuatable by a respective advancement wheel (7) and lock wheel (8), a joint advance part (16; 116) and a joint ratchet part (20; 120) being arranged to actuate said winding shaft (5) or winding shafts (105, 106), and that a manually actuatable release arm (25; 125) for the release of advancement and locking of the winding shaft (5)/the winding shafts (105) is arranged.

8. Device according to any one of the preceding claims, **characterized in that** a power-operated motor (26; 326) is connected to the drive mechanism, which comprises a variable adjustment of the tightening force by means of an adjustable spring force.

9. Device according to any one of the preceding claims 1-7, **characterized in that** a spring (40) is connected between the advance mechanism (4) and the locking mechanism (9) in order to, on one hand, press an advance plate (16) against an advance gear (7), and on the other hand press a locking plate (20; 120) against a locking gear (8).

10. Device according to any one of the preceding claims, **characterized in that** a retension mechanism in the form of a spring (75; 300), which is accommodated in a manually actuatable handwheel (76) of the winding shaft (5), or on a release arm (301) of the mechanisms, is arranged to eliminate after slack of the strap (3).

## Patentansprüche

1. Vorrichtung (1) an einer Winde (2) mit einem Zugelement (3), die einen Vortriebsmechanismus (4) umfasst, um einen Vortrieb einer Wickelwelle (5) des Zugelements (3) vorzusehen, mit einem betätigbaren, exzentrisch montierten Rotationsteil (6), das senkrecht oder parallel zu der Wickelwelle (5) des Vortriebsmechanismus (4) drehbar montiert ist, wobei die Wickelwelle (5) mit zumindest einem Vortriebsrad (7) und mit zumindest einem Sperrrad (8) verbunden ist, wobei der Vortriebsmechanismus (4) und ein betätigbarer Sperrmechanismus (9) mit dem Vortriebsrad (7) bzw. mit dem Sperrrad (8) zusammenwirken können, wobei das exzentrisch montierte Betätigungsteil (10) in direkter (11) oder in indirekter (110) Verbindung mit dem Vortriebsmechanismus (4) für die Betätigung des Vortriebsrades (7) für einen schrittweisen Vortrieb steht,
**dadurch gekennzeichnet, dass**
eine exzentrisch montierte Rolle (10) in direkter Verbindung mit einem Antriebsbetätigungs-Vortriebsteil (16) der Vorrichtung steht, das als eine Platte oder ein anderes Druckteil gebildet ist.

2. Vorrichtung nach Anspruch 1,
**dadurch gekennzeichnet, dass**
das Vortriebsrad (7) und das Sperrrad (8) vereint sind, und dass vorzugsweise ein derartiges vereintes Vortriebs- und Sperrrad (12) verbunden mit der Wickelwelle (5) an jedem Ende (13, 14) derselben angeordnet ist.

3. Vorrichtung nach einem der vorhergehenden Ansprüche,
**dadurch gekennzeichnet, dass**
ein exzentrisch montierter Schwingarm (150) mit einem das Vortriebsrad betätigenden Vortriebsteil verbunden ist, das als eine Platte (116) oder anderes Druckteil gebildet ist.

4. Vorrichtung nach einem der vorhergehenden Ansprüche,
**dadurch gekennzeichnet, dass**
der Sperrmechanismus (9) ein Sperrklinkenteil (20), vorzugsweise eine Sperrklinkenplatte, umfasst, das derart angeordnet ist, dass es in einem lösbar betätigbaren Sperreingriff mit einem Sperrrad (8) steht.

5. Vorrichtung nach einem der vorhergehenden Ansprüche,
**dadurch gekennzeichnet, dass**
das Sperrrad (8) sowie das Vortriebsrad (7) mit Klauenzähnen (21) in der Form von Zahnrädern versehen sind, in welchen der Sperrmechanismus (9) und der Vortriebsmechanismus (4) derart angeordnet sind, dass sie für ein Sperr-Zusammenwirken (L) bzw. für eine Antriebsbetätigung (D) lösbar betätigbar in Eingriff stehen.

6. Vorrichtung nach einem der vorhergehenden Ansprüche,
**dadurch gekennzeichnet, dass**
das Betätigungsteil (10) ein Griffteil (23) in der Form eines unregelmäßigen Hohlraums oder äußeren Rotationsteils zum lösbaren rotatorischen Zusammenwirken mit einem manuellen oder mechanischen Rotationsteil, zum Beispiel einem Schraubendreher, einem elektrischen Mutterndreher oder einem Sechskantstiftschlüssel, umfasst.

7. Vorrichtung nach einem der vorhergehenden Ansprüche,
**dadurch gekennzeichnet, dass**
eine einzelne Wickelwelle (5) oder paarweise doppelte Wickelwellen (105, 106) durch ein jeweiliges Vortriebsrad (7) und Sperrrad (8) betätigbar ist/ sind, wobei ein vereintes Vortriebsteil (16; 116) und ein verbundenes Sperrklinkenteil (20; 120) derart angeordnet sind, dass sie die Wickelwelle (5) oder Wickelwellen (105, 106) betätigen, und dass ein manuell betätigbarer Freigabearm (25; 125) zum Freigeben des Vorantreibens und Sperrens der Wickelwelle (5)/ der Wickelwellen (105) angeordnet ist.

8. Vorrichtung nach einem der vorhergehenden Ansprüche,
**dadurch gekennzeichnet, dass**
ein kraftbetätigter Motor (26; 326) mit dem Antriebsmechanismus verbunden ist, der eine variable Einstellung der Anzugskraft mittels einer einstellbaren Federkraft umfasst.

9. Vorrichtung nach einem der vorhergehenden Ansprüche 1 bis 7,
**dadurch gekennzeichnet, dass**
eine Feder (40) zwischen den Vortriebsmechanismus (4) und den Sperrmechanismus (9) geschaltet ist, um einerseits eine Vortriebsplatte (16) gegen ein Vortriebszahnrad (7) zu pressen, und andererseits eine Sperrplatte (20; 120) gegen ein Sperrzahnrad (8) zu pressen.

10. Vorrichtung nach einem der vorhergehenden Ansprüche,
**dadurch gekennzeichnet, dass**
ein Rückzugsmechanismus in der Form einer Feder (75; 300), der in einem manuell betätigbaren Handrad (76) der Wickelwelle (5) oder an einem Freigabearm (301) des Mechanismus aufgenommen ist, angeordnet ist, um nachträglichen Durchhang des Bandes (3) zu beseitigen.

## Revendications

1. Dispositif (1) à treuil (2) comportant un élément de traction (3), et comportant un mécanisme de déplacement (4) pour l'entraînement d'un axe d'enroulement (5) dudit élément de traction (3) possédant une partie de rotation (6) actionnable montée de manière excentrique et parallèle ou perpendiculaire à l'axe d'enroulement (5) dudit mécanisme de déplacement (4), dans lequel l'axe d'enroulement (5) est relié à au moins une roue de déplacement (7) et à au moins une roue de blocage (8), dans lequel le mécanisme de déplacement (4) et un dispositif de blocage actionnable (9) peuvent être respectivement actionnés simultanément avec ladite roue de déplacement (7) et avec ladite roue de blocage (8), la partie d'actionnement (10) montée de manière excentrique étant en engagement direct (11) ou indirect (110) avec ledit mécanisme de déplacement (4) pour l'entraînement de la roue de déplacement (7) pour un entraînement progressif, **caractérisé en ce qu'**un cylindre (10) monté excentrique est en engagement direct avec une partie de déplacement (16) du dispositif, actionnée par entraînement et conformée en tant que plaque ou qu'une autre pièce de pression.

2. Dispositif selon la revendication 1, **caractérisée en ce que** la roue de déplacement (7) et la roue de blocage (8) sont jumelées, et **en ce que** cette roue jumelée de déplacement et de blocage (12) est préférentiellement reliée audit axe d'enroulement (5) au niveau de chaque extrémités (13, 14) de celui-ci.

3. Dispositif selon l'une quelconque des revendications précédentes, **caractérisé en ce qu'**un bras alternatif monté de manière excentrique (150) est relié à une partie de déplacement actionnée par déplacement de roue conformée en tant que plaque (116) ou qu'une autre pièce de pression.

4. Dispositif selon l'une quelconque des revendications précédentes, **caractérisé en ce que** le dispositif de blocage (9) comporte une partie de cliquet (20), préférentiellement une plaque d'encliquetage, qui est prévue pour être en engagement de blocage actionnable amovible avec une roue de blocage (8).

5. Dispositif selon l'une quelconque des revendications précédentes, **caractérisé en ce que** la roue de blocage (8) ainsi que la roue de déplacement (7) sont pourvues de dents (21) sous la forme d'engrenages, dans lesquelles le dispositif de blocage (9) et le mécanisme de déplacement (4) sont prévus pour venir en engagement actionnable amovible respectivement pour le blocage simultané (L) et pour l'actionnement en entraînement (D).

6. Dispositif selon l'une quelconque des revendications précédentes, **caractérisé en ce que** la partie d'actionnement (10) comporte une partie de préhension (23) sous la forme d'une cavité régulière ou d'une pièce externe de rotation pour la coopération en rotation amovible avec une pièce manuelle ou mécanique de rotation, par exemple un tournevis, une machine électrique à visser les écrous, ou une clé alène.

7. Dispositif selon l'une quelconque des revendications précédentes, **caractérisé en ce qu'**un axe d'enroulement (5) unique ou une paire d'axes d'enroulement doubles (105, 106) est/sont respectivement actionnable(s) par une roue de déplacement (7) et une roue de blocage (8), une partie de déplacement jumelée (16 ; 116) et une partie de cliquet (20 ; 120) étant prévues pour actionner ledit axe d'enroulement (5) ou lesdits axes d'enroulement (105, 106), et **en ce qu'**un bras de dégagement manuellement actionnable (25 ; 125) pour le dégagement du déplacement et le blocage de l'axe d'enroulement (5)/les axes d'enroulement (105) est prévu.

8. Dispositif selon l'une quelconque des revendications précédentes, **caractérisé en ce qu'**un moteur électrique (26 ; 326) est relié au mécanisme d'entraînement, qui comprend un réglage variable de la force de serrage au moyen d'un ressort à force réglable.

9. Dispositif selon l'une quelconque des revendications précédentes 1 à 7, **caractérisé en ce qu'**un ressort (40) est monté entre le mécanisme de déplacement (4) et le dispositif de blocage (9), de manière à, d'une part, pousser une plaque de déplacement (16) contre un engrenage de déplacement (7), et d'autre part, pousser une plaque de blocage (20 ; 120) contre un engrenage de blocage (8).

10. Dispositif selon l'une quelconque des revendications précédentes, **caractérisé en ce qu'**un mécanisme de remise sous tension sous forme d'un ressort (75 ; 300), qui est logé dans un volant de commande manuellement actionnable (76) de l'axe d'enroulement (5), ou sur un bras de dégagement (301) du mécanisme, est prévu pour éliminer le mou de la courroie (3).
